# EUROPEAN PATENT APPLICATION

(11) **EP 2 506 210 A1**
(43) Date of publication of application: **03.10.2012**
(21) Application number: 12161673.4
(22) Date of filing: 28.03.2012
(51) Int. Cl.: G06Q 50/06

(54) **Systems and methods for forecasting electrical load**

(30) Priority: 30.03.2011 US 201113075618
(71) Applicant: General Electric Company, Schenectady, NY 12345 (US)
(72) Inventor: McMullin, Dale Robert, Canton, GA Georgia 30114 (US); Caird, Kenneth James, Smyrna, GA Georgia 30082 (US)
(74) Representative: Picker, Madeline Margaret

(57) **Abstract**

Systems (100) and methods for forecasting electrical load are provided. A baseline load forecast for a future time period may be determined (210) by a forecasting system associated with a power utility (135). As desired, the forecasting system may include one or more computers. Information associated with at least one of (i) a scheduled demand for the future time period or (ii) a planned outage associated with the future time period may be determined (210) by the forecasting system. Based at least in part on the determined information, the forecasting system may modify (215) the baseline load forecast. Based at least in part on the modified baseline load forecast, the forecasting system may generate (220) a bid contract for the future time period.

## Description

### FIELD OF THE INVENTION

Embodiments of the invention relate generally to power distribution networks, and more specifically to systems and methods for forecasting electrical load within a power distribution network for a future period of time.

### BACKGROUND OF THE INVENTION

Power distribution networks, such as an electrical power grid, are utilized to deliver electrical power from power supplies to consumers or customers. In order to balance power supply and demand within a power distribution network, regional transmission organizations ("RTOs") and Independent System Operators ("ISOs") have been established. The RTOs and ISOs coordinate generation and transmission across wide geographic areas. Additionally, the RTOs and ISOs operate wholesale electricity markets that enable participants to buy and sell electricity in real-time or in advance. Typically, utility providers and other participants purchase or sell electricity on a day-ahead basis by submitting bid contracts to an RTO or an ISO.

Day-ahead bid contracts are binding on participants. In other words, a utility provider will be charged for day-ahead purchases regardless of whether the utility uses all of the purchased electricity. Accordingly, systems and methods for forecasting or predicting electrical load are desirable.

### BRIEF DESCRIPTION OF THE INVENTION

Some or all of the above needs and/or problems may be addressed by certain embodiments of the invention. Embodiments of the invention may include systems and methods for forecasting electrical load. According to one embodiment of the invention, there is disclosed a method for forecasting electrical load. A baseline load forecast for a future time period may be determined by a forecasting system associated with a power utility. As desired, the forecasting system may include one or more computers. Information associated with at least one of (i) a scheduled demand for the future time period or (ii) a planned outage associated with the future time period may be determined by the forecasting system. Based at least in part on the determined information, the forecasting system may modify the baseline load forecast. Based at least in part on the modified baseline load forecast, the forecasting system may generate a bid contract for the future time period.

According to another embodiment of the invention, there is disclosed a system for forecasting electrical load. The system may include at least memory and at least one processor. The at least one memory may be configured to store computer-executable instructions. The at least one processor may be configured to access the at least one memory and execute the computer-executable instructions to (i) determine, for a power utility, a baseline load forecast for a future time period; determine information associated with at least one of (a) a scheduled demand for the future time period or (b) a planned outage associated with the future time period; modify, based at least in part on the determined information, the baseline load forecast; and generate, based at least in part on the modified baseline load forecast, a bid contract for the future time period.

Additional systems, methods, apparatus, features, and aspects are realized through the techniques of various embodiments of the invention. Other embodiments and aspects of the invention are described in detail herein and are considered a part of the claimed inventions. Other embodiments and aspects can be understood with reference to the description and the drawings.

### BRIEF DESCRIPTION OF THE DRAWINGS

Having thus described the invention in general terms, reference will now be made to the accompanying drawings, which are not necessarily drawn to scale, and wherein:
FIG. 1 is a block diagram of one example system that facilitates the forecasting of electrical load, according to an illustrative embodiment of the invention.
FIG. 2 is a flow diagram of an example method for forecasting electrical load, according to an illustrative embodiment of the invention.
FIG. 3 is a flow diagram of an example method for modifying a baseline load forecast in order to predict future electrical load requirements, according to an illustrative embodiment of the invention.

### DETAILED DESCRIPTION OF THE INVENTION

Illustrative embodiments of the invention now will be described more fully hereinafter with reference to the accompanying drawings, in which some, but not all embodiments of the invention are shown. Indeed, the invention may be embodied in many different forms and should not be construed as limited to the embodiments set forth herein; rather, these embodiments are provided so that this disclosure will satisfy applicable legal requirements. Like numbers refer to like elements throughout.

Disclosed are systems and methods for forecasting electrical load for a future time period, such as a next day. In various embodiments of the invention, a suitable forecasting system, such as a forecasting system associated with a utility provider, may be provided, and the forecasting system may predict or forecast future electrical load requirements. According to an aspect of the invention, the forecasting system may collect and utilize a wide variety of information that may affect future electrical load requirements. Examples of suitable information that may be utilized include, but are not limited to, scheduled electrical demand information for the future time period, planned outage and/or switching schedule information, and/or information associated with the availability of renewable energy sources or renewable resources. Based at least in part on the obtained information, the forecasting system may determine or calculate a relatively accurate load forecast for the future time period. In this regard, a relatively accurate bid contract may be generated for the future time period, such as a bid to generate a desired quantity of electricity. As a result of accurately forecasting electrical load and generation, a spinning reserve of electrical power may be reduced, and relatively higher operational efficiencies may be achieved.

In one example embodiment, the forecasting system may determine a baseline load forecast for a future time period. The forecasting system may then obtain and/or determine additional information (e.g., scheduled demand, planned outages, renewable resource availability, etc.) associated with a future load, and the forecasting system may modify the baseline load forecast based at least in part upon the additional information. The determined baseline load forecast may be similar to a load forecast that is determined by conventional forecasting systems. A wide variety of suitable methods and/or techniques may be utilized to determine the baseline load forecast. For example, a degree day associated with the future time period may be calculated or determined. Historical load data may then be accessed, and a historical degree day that is similar to the determined degree day may be identified. The baseline load forecast for the future time period may then be determined based upon the electrical load associated with the historical degree day. As desired, the historical electrical load may be multiplied by a load growth factor in order to determine the baseline load forecast. In other words, load growth may be taken into account when predictions are being made based upon historical data.

Once the baseline load forecast has been determined, the forecasting system may modify the baseline load forecast utilizing a wide variety of additional information. In this regard, an accuracy of the load forecast for the future time period may be increased or improved. In certain embodiments, the forecasting system may determine scheduled demand data for the future time period. For example, the forecasting system may obtain scheduled demand data for one or more customers of the utility provider. In certain embodiments, one or more customer devices, such as power meters and/or home gateway devices, may directly or indirectly communicate scheduled demand data and/or load profile data to the forecasting system. The forecasting system may process at least a portion of the received data in order to determine or calculate a scheduled demand for the future time period. This scheduled demand may then be utilized to more accurately project an electrical load for the future time period, and the baseline load forecast may be modified accordingly.

Additionally, in certain embodiments, the forecasting system may obtain information associated with planned outages for the future time period. For example, the forecasting system may identify one or more planned outages (e.g., planned maintenance for a power distribution system etc.), and the forecasting system may determine one or more switching schedules associated with the planned outages. The forecasting system may then determine a potential impact that the planned outages and/or switching events may have on the load demand for the future time period. Accordingly, the forecasting system may adjust or modify the baseline load forecast in order to take planned outages into account.

Additionally, as desired in various embodiments, the forecasting system may obtain information associated with one or more renewable resources, such as wind turbines, photovoltaic cells, and/or other resources configured to provide power to a power distribution network and/or to customers of the utility provider. For example, the forecasting system may obtain information associated with renewable resources operated by and/or associated with the utility provider. As another example, the forecasting system may obtain information associated with renewable resources operated by and/or otherwise associated with customers of the utility provider. As desired, the forecasting system may additionally obtain weather information associated with the future time period, and the forecasting system may determine or predict an impact of the weather conditions on an output of the renewable resources. The forecasting system may determine or predict an estimated output of the renewable resources that will be provided to the power distribution network and/or to various customers of the utility provider. The forecasting system may then utilize the estimated output to modify or adjust the baseline load forecast. In this regard, the accuracy of a load forecast for the future time period may be improved or increased.

Various embodiments of the invention may include one or more special purpose computers, systems, and/or particular machines that facilitate the forecasting of electrical load. A special purpose computer or particular machine may include a wide variety of different software modules as desired in various embodiments. As explained in greater detail below, in certain embodiments, these various software components may be utilized to obtain load information associated with a utility provider and/or to predict or forecast an expected electrical demand and/or load for a future time period.

Certain embodiments of the invention described herein may have the technical effect of forecasting or predicting an expected load associated with a power utility. For example, a day-ahead load forecast may be calculated utilizing a wide variety of information, such as scheduled demand information, planned outage information, and/or information associated with an availability of renewable resources. In this regard, a relatively accurate prediction or forecast may be calculated for a future time period, thereby allowing the power utility to submit relatively accurate bids to an ISO or other generation authority. The ability to generate relatively faster and/or relatively more accurate forecasts may also promote an ability to bid into relatively short term contracts and/or relatively higher risk contracts. In certain embodiments, these contracts may be potentially purchased at a premium.

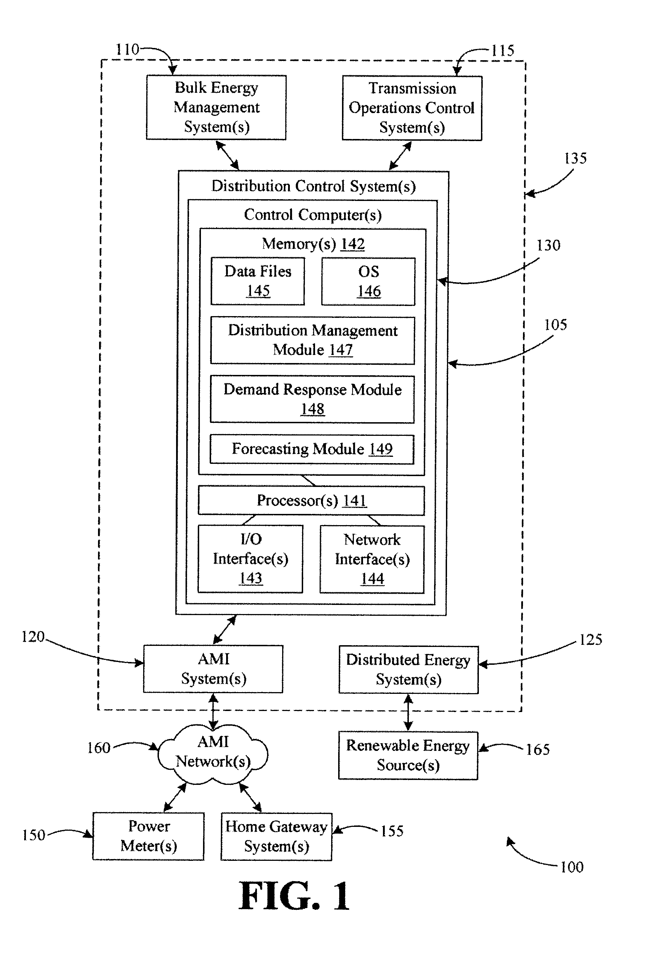

FIG. 1 is a block diagram of one example system 100 that facilitates the forecasting of electrical load, according to an illustrative embodiment of the invention. The system 100 illustrated in FIG. 1 may include, for example, one or more distribution control systems 105, one or more bulk energy management systems 110, one or more transmission operations control systems 115, one or more Advanced Metering Infrastructure ("AMI") systems 120, and/or one or more distributed energy systems 125. As desired, one or more of the components of the system 100 may include one or more suitable computers configured to control operations within the system 100 and/or to facilitate communication with other components of the system 100. A suitable control computer 130 associated with the distribution control system 105 is described in greater detail. Other components may include computers or other processor-driven devices that include similar components to the control computer 130 associated with the distribution control system 105. The various computers and/or processor-driven devices may facilitate the management and/or supply of electrical power to a power distribution network. For example, in certain embodiments, one or more of the components of the system 100 may be associated with a utility provider 135, and the components of the system 100 may facilitate the generation, purchase, and/or supply of power by the utility provider 135.

In one example embodiment, the bulk energy management systems 110 may include and/or control any number of power generation systems, devices, and/or means, such as a power plant associated with the utility provider. The bulk energy management systems 110 may monitor the various power generation devices in order to control an amount of electrical power that is generated. The transmission operations control systems 115 may direct and/or control an amount of electrical power that is transmitted or supplied by the power generation devices onto a power distribution network. In certain embodiments, the transmission operations control systems 115 may be in communication with the bulk energy management systems 110, and the transmission operations control systems 115 may include a suitable energy management subsystem and/or module that facilitates control over the transmission of electrical power.

As desired, the bulk energy management systems 110 and/or the transmission operations control systems 115 may be in communication with the distribution control systems 105. In this regard, the bulk energy management systems 110 may monitor and/or manage an amount of power generated by the bulk energy management systems 110 and/or transmitted by the transmission operations control systems 115. Additionally, the distribution control systems 105 may be in communication with the AMI systems 120 and/or the distributed energy systems 125. In this regard, the distribution control systems 105 may collect information associated with any number of distributed energy systems (e.g., renewable energy sources, etc.) and/or customers of the utility provider. The distribution control systems 105 may utilize at least a portion of the collected information to balance power supply and power demand. Additionally, in accordance with an aspect of the invention, the distribution control systems 105 may forecast or predict future load requirements for any number of future time periods, such as a next day.

With reference to the distribution control systems 105, any number of control computers 130 and/or other computer processing components may be associated with the distribution control systems 105. The control computers 130 may control operations of the distribution control systems 105, including the forecasting of future load requirements. Examples of suitable processing devices that may be incorporated into a control computer 130 include, but are not limited to, server computers, personal computers, application-specific circuits, microcontrollers, minicomputers, other computing devices, and the like. As such, a control computer 130 may include any number of processors 141 that facilitate the execution of computer-readable instructions. By executing computer-readable instructions, the control computer 130 may include or form a special purpose computer or particular machine that facilitates power distribution and/or load forecasting.

In addition to one or more processor(s) 141, the control computer 130 may include one or more memory devices 142, one or more input/output ("I/O") interfaces 143, and/or one or more network interfaces 144. The one or more memory devices 142 or memories may include any suitable memory devices, for example, caches, read-only memory devices, random access memory devices, magnetic storage devices, etc. The one or more memory devices 142 may store data, executable instructions, and/or various program modules utilized by the control computer 130, for example, data files 145, an operating system ("OS") 146, a distribution management module 147, a demand response module 148, and/or a forecasting module 149. The data files 145 may include any suitable data that facilitates the operation of the control computer 130 including, but not limited to, information associated with one or more other components of the system 100, historical load data, scheduled demand data, planned outage data, switching schedule data, and/or weather data. The OS 146 may include executable instructions and/or program modules that facilitate and/or control the general operation of the control computer 130. Additionally, the OS 146 may facilitate the execution of other software programs and/or program modules by the processors 141, such as the distribution management module 147, the demand response module 148, and/or the forecasting module 149.

The distribution management module 147 may be a suitable software module or application configured to manage the state of a power distribution network in real-time or near real-time. The distribution management module 147 may monitor distribution assets (e.g., transformers, switches, etc.) and control power distribution within the network. For example, the distribution management module 147 may control automated switching operations in conjunction with managing orders associated with manual switching operations. The demand response module 148 may be a suitable software module or application configured to control load within the power distribution network in response to one or more demand parameters. For example, the demand response module 148 may monitor a power demand within the power distribution network and control supplied power based at least in part on the monitored demand. Although the distribution management module 147 and the demand response module 148 are described as software modules, the modules may be subsystems that include any number of suitable hardware and/or software components. Additionally, the modules may be associated with other subsystems or components of the system 100. Indeed, various control functions within the system 100 may be distributed in a wide variety of different ways.

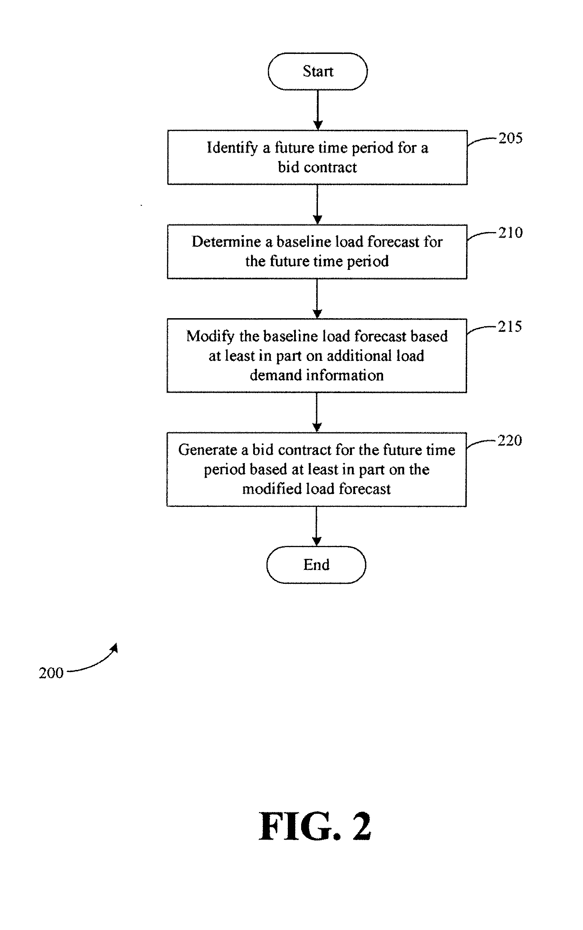

The forecasting module 149 may be a suitable software module or application configured to predict or forecast electrical load for a future period of time, such as a next day or another suitable time period (e.g., a few hours, half a day, etc.). In this regard, relatively accurate bid contracts may be generated on behalf of the utility provider 135, thereby improving operational efficiencies and reducing spinning reserve. A wide variety of suitable methods and/or techniques may be utilized by the forecasting module 149 to forecast electrical load. A few examples of the operations that may be performed by the forecasting module 149 are described in greater detail below with reference to FIGS. 2-3. Additionally, as desired, a wide variety of different information may be taken into account by the forecasting module 149, such as information utilized to determine a baseline load forecast (e.g., historical information, degree day information, load growth information, etc.), scheduled demand information, planned outage information, and/or information associated with available renewable resources (e.g., wind turbines, photovoltaic cells, etc.).

With continued reference to the control computer 130, the one or more I/O interfaces 143 may facilitate communication with any number of suitable input/output devices, such as a display, a keypad, a mouse, a keyboard, a microphone, a control panel, a touch screen display, etc., that facilitate user interaction with the control computer 130. In this regard, user commands may be locally received by the control computer 130. Additionally, information may be displayed and/or otherwise output to a user. The one or more network interfaces 144 may facilitate connection of the control computer 130 to any number of suitable networks, such as a local area network, a wide area network, an AMI network, etc. In this regard, the control computer 130 may receive data from and/or communicate data to other components of the system 100.

With continued reference to FIG. 1, any number of AMI systems 120 may be provided. An AMI system 120 may include any number of suitable hardware and/or software components, such as an AMI head end software application, that facilitate communication with any number of suitable power meters 150 (e.g., smart power meters) and/or home gateway systems 155 associated with customers of the utility provider 135. In certain embodiments, communications may be facilitated via one or more suitable AMI networks 160; however, as desired, other networks may be utilized for communication, such as a cellular network and/or the Internet. As a result of communicating with power meters 150 and/or home gateway systems 155, a wide variety of information may be collected by the AMI systems 120 and provided to other components of the system 100, such as the forecasting module 149. Examples of suitable information that may be collected include, but are not limited to, scheduled demand data for any number of appliances and/or other electrical loads associated with customers (e.g., scheduled air conditioner settings, scheduled light settings, etc.), information associated with renewable resources associated with the customers, and/or local power management and/or power distribution information associated with the customers (e.g., an amount of power generated by renewable resources that will be utilized by the customers, an amount of power generated by renewable resources that will be sold or provided to a power distribution network, etc.). In certain embodiments, information may be pushed to the AMI systems 120 by the customer devices. In other embodiments, information may be received by the AMI systems 120 in response to one or more requests communicated to the customer devices. As desired, at least a portion of the collected information may be utilized by the forecasting module 149 during the generation of a load forecast for a future time period.

As desired, any number of distributed energy systems 125 may be provided. A distributed energy system 125 may include any number of suitable hardware and/or software components that facilitate communication with any number of distributed energy sources, such as renewable energy sources 165 or renewable resources. In operation, a distributed energy system 125 may facilitate the collection of operational data from distributed energy resources. As desired, at least a portion of the collected operational data may be provided to the forecasting module 149. Additionally, the distributed energy system 125 may facilitate control or direction of the operations of the distributed energy resources. Any number of renewable energy sources 165 (also referred to as renewable resources) may be provided. Examples of suitable renewable energy sources 165 include, but are not limited to, photovoltaic cells and/or arrays (e.g., solar panels), wind turbines, electrical generators (e.g., gas generators, etc.), and/or any number of power storage devices, such as batteries, capacitor banks, etc. Direct current and/or alternating current devices may be utilized as desired. In the event that direct current devices (e.g., photovoltaic cells, direct current storage devices, etc.) are utilized, any number of suitable inverters may be utilized to convert a supplied direct current power signal into an alternating current power signal that may be provided to power distribution network.

In certain embodiments, various components of the system 100 may be in communication with one another via any number of suitable networks, such as local area networks, wide area networks, the Internet, cellular networks, AMI networks, various dedicated networks, etc.

As desired, embodiments of the invention may include a system 100 with more or less than the components illustrated in FIG. 1. Additionally, certain components of the system 100 may be combined in various embodiments of the invention. The system 100 of FIG. 1 is provided by way of example only.

FIG. 2 is a flow diagram of an example method 200 for forecasting electrical load, according to an illustrative embodiment of the invention. The method 200 may be utilized in association with one or more forecasting systems, such as the system 100 illustrated in FIG. 1. In certain embodiments, the operations of the method 200 may be performed by a suitable forecasting module, such as the forecasting module 149 illustrated in FIG. 1.

The method 200 may begin at block 205. At block 205, a future time period for generating a bid contract may be identified. For example, a future time period for generating a bid contract associated with a utility provider for communication to an ISO or other system may be identified. A wide variety of future time periods may be utilized as desired in various embodiments of the invention. For example, a next day may be utilized to generate a day-ahead bid contract. As other examples, multiple days, a portion of a day (e.g., half a day, a few hours, etc.) may be utilized as a future time period.

At block 210, a baseline load forecast may be determined for the future time period. A wide variety of suitable methods and/or techniques may be utilized as desired to determine the baseline load forecast. For example, given a future time period of the next day, various weather conditions (e.g., temperature, cloud cover, etc.) may be utilized to calculate or determine a degree day associated with the future time period. For other future time periods, similar degree day calculations may be made. For example, degree day information may be calculated for any number of hours. Once degree day information has been determined, historical load data may be accessed from any number of suitable memory devices and/or data sources, and a historical degree day similar to the determined degree day may be identified. For example, a historical day that is similar to a next day may be identified. The baseline load forecast for the future time period may then be determined based upon the electrical load associated with the historical degree day. As desired, the historical electrical load may be multiplied by a load growth factor in order to determine the baseline load forecast. For example, if the average load has grown by forty percent between the historical day and the present date, the historical electrical load may be multiplied by 1.4 to take the load growth into consideration.

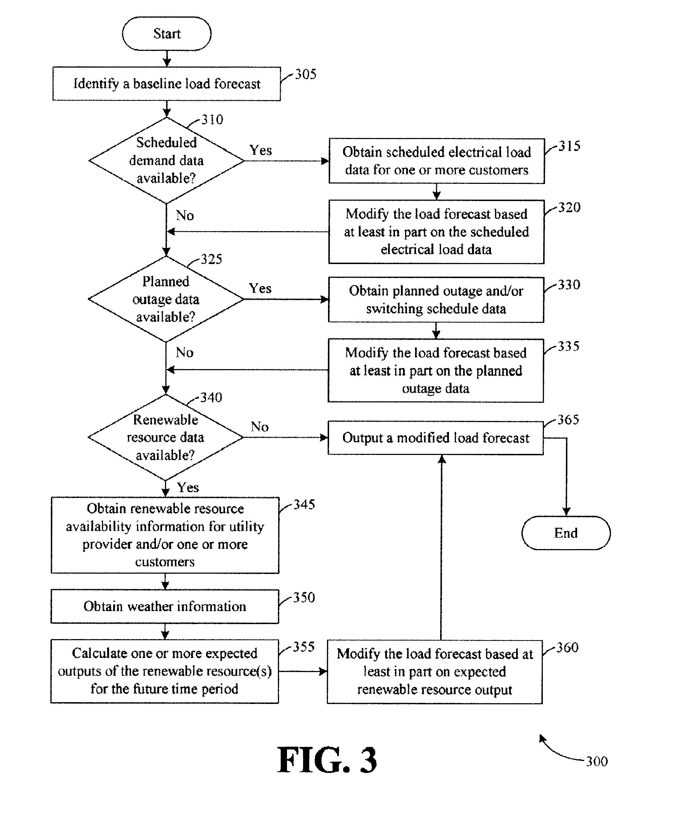

At block 215, the baseline load forecast may be modified based upon a wide variety of additional load demand data. In this regard, an accuracy of the load forecast may be improved. Examples of suitable information that may be utilized to modify a baseline load forecast include, but are not limited to, scheduled demand information (e.g., customer demand information), planned power outage information, and/or information associated with the availability of renewable resources. Additionally, a wide variety of suitable methods and/or techniques may be utilized to modify a baseline load forecast. One example of the operations that may be utilized to modify a baseline load forecast is described in greater detail below with reference to FIG. 3.

At block 220, a bid contract may be generated for the future time period based at least in part on the modified load forecast. For example, a day-ahead bid contract may be generated. The generated bid contract may be provided to an ISO or other regulatory system in order to facilitate the purchase of power generation and/or power supply for the future time period.

The method 200 of FIG. 2 may end following block 220.

FIG. 3 is a flow diagram of an example method 300 for modifying a baseline load forecast in order to predict future electrical load requirements, according to an illustrative embodiment of the invention. The method 300 may illustrate one example of the operations that may be performed at block 215 of FIG. 2. As such, the method 300 may be utilized in association with one or more forecasting systems, such as the system 100 illustrated in FIG. 1. Additionally, in certain embodiments, the operations of the method 300 may be performed by a suitable forecasting module, such as the forecasting module 149 illustrated in FIG. 1.

The method 300 may begin at block 305. At block 305, a baseline load forecast may be identified, such as the baseline load forecast determined at block 210 of FIG. 2. Operations may then continue at block 310, and a determination may be made as to whether scheduled demand data is available. In certain embodiments, a determination may be made as to whether scheduled demand data is available for any number of customers of a utility provider. If it is determined at block 310 that scheduled demand data is not available, then operations may continue at block 325 described below. If, however, it is determined at block 310 that scheduled demand data is available, then operations may continue at block 315.

At block 315, scheduled demand data (e.g., scheduled electrical load information) may be obtained from any number of customer devices, such as smart power meters, home gateway systems, and/or home power management systems. In certain embodiments, one or more requests for scheduled demand data may be communicated to one or more customer devices, and scheduled demand data may be received in response to the one or more requests. In other embodiments, scheduled demand data may be pushed from customer devices to a system associated with the utility provider, and at least a portion of the scheduled demand data may be stored for subsequent access by the forecasting module 149. A wide variety of different types of scheduled demand data may be obtained as desired in various embodiments of the invention, such as scheduled power to be supplied to one or more electrical appliances and/or loads, operational schedules for one or more electrical appliances and/or loads, and/or scheduled load profile information.

At block 320, at least a portion of the obtained scheduled demand data may be processed and/or analyzed. A load forecast for the future time period, such as the baseline load forecast, may be modified or adjusted based at least in part on the scheduled demand data. As desired, a potential impact of the scheduled demand data on the load during the future time period may be estimated or determined. According to an aspect of the invention, scheduled demand data may be utilized to improve an accuracy of a load forecast for the future time period. Operations may then continue at block 325.

At block 325, a determination may be made as to whether planned outage data is available. In other words, a determination may be made as to whether the utility provider has scheduled or planned power outages for maintenance purposes. These power outages may affect the load within the future time period. If it is determined at block 325 that planned outage data is not available, then operations may continue at block 340 described below. If, however, it is determined at block 325 that planned or scheduled demand data is available, then operations may continue at block 330.

At block 330, planned outage data may be obtained from memory and/or from any number of suitable components or systems associated with the utility provider, such as a maintenance system. A wide variety of planned outage data may be obtained as desired in various embodiments of the invention, such as dates and/or times associated with power outages and/or switching schedules (e.g., information associated with the provision and/or distribution of power during the restoration of power following an outage) associated with planned outages. One or more additional systems may be accessed to further estimate costs associated with time to restoration, resources and equipment required for repair, and/or the impact of the restoration time and/or cost on total load over time. At block 335, at least a portion of the obtained planned outage data may be processed and/or analyzed. A potential impact of one or more planned outages on electrical load during the future time period may be calculated, estimated, or determined. A load forecast for the future time period may then be modified or adjusted in order to take planned outages into consideration. In this regard, an accuracy of the load forecast may be improved. Operations may then continue at block 340.

Although the processing of planned outage data is described, unplanned outage data may also be processed in certain embodiments of the invention. For example, information associated with unplanned outages may be taken into consideration during the forecasting of relatively short-term demand in order to bid on relatively short-term contracts.

At block 340, a determination may be made as to whether renewable resource data is available. In other words, a determination may be made as to whether information associated with power to be supplied by renewable power sources and/or power storage devices is available for the future time period. If it is determined at block 340 that renewable resource information is not available, then operations may continue at block 365 described in greater detail below. If, however, it is determined at block 340 that renewable resource information is available, then operations may continue at block 345.

At block 345, information associated with renewable resource availability may be obtained. As desired in various embodiments, renewable resource availability information may be obtained from a wide variety of different sources. For example, information associated with renewable resources for the utility provider may be obtained from any number of distributed energy systems, such as the distributed energy systems 125 illustrated in FIG. 1. As another example, information associated with renewable resources associated with customers of the utility provider may be obtained from any number of customer devices, such as power meters, home gateway systems, and/or power management systems. In certain embodiments, information may be obtained from customer devices via an AMI network or other suitable network. Additionally, renewable resource information may be pushed to the forecasting module 149 by customer devices and/or pulled from customer devices as a result of communicating one or more requests to the customer devices. A wide variety of information associated with renewable resources may be obtained as desired in various embodiments of the invention. Examples of information include, but are not limited to, a scheduled output of one or more renewable resources, an amount of produced power scheduled to be provided to a power distribution network and/or an amount of produced power scheduled to be stored, used, and/or consumed by customers (e.g., an amount of power to be stored in one or more batteries, an amount of power to be provided to electrical loads associated with the customer, etc.).

At block 350, which may be optional in certain embodiments of the invention, weather information for the future time period may be obtained and/or determined. For example, information associated with one or more weather conditions (e.g., cloud cover information, visibility information, wind information, etc.) that may affect an output of one or more renewable resources may be obtained.

At block 355, one or more expected outputs of the renewable resources for the future time period may be calculated or determined. For example, expected outputs of renewable resources that will be provided to a power distribution network and/or to various customers may be determined. As desired, weather information may be utilized to determine the one or more expected outputs. For example, a potential impact of various weather conditions on the outputs of any number of renewable resources may be determined, and the expected outputs of the renewable resources may be adjusted accordingly.

At block 360, a load forecast may be modified or adjusted based at least in part on the one or more expected outputs for the renewable resources. For example, an expected load forecast may be reduced by the expected outputs of the renewable resources. In this regard, a utility provider may avoid submitting a bid for power that will be supplied from distributed energy systems. Accordingly, an accuracy of a load forecast may be increased or improved. Operations may then continue at block 365, and a modified load forecast may be output for use in the generation of a bid contract for the future time period.

The method 300 of FIG. 3 may end following block 365.

The operations described and shown in the methods 200, 300 of FIGS. 2-3 may be carried out or performed in any suitable order as desired in various embodiments of the invention. Additionally, in certain embodiments, at least a portion of the operations may be carried out in parallel. Furthermore, in certain embodiments, less than or more than the operations described in FIGS. 2-3 may be performed.

The invention is described above with reference to block and flow diagrams of systems, methods, apparatus, and/or computer program products according to example embodiments of the invention. It will be understood that one or more blocks of the block diagrams and flow diagrams, and combinations of blocks in the block diagrams and flow diagrams, respectively, can be implemented by computer-executable program instructions. Likewise, some blocks of the block diagrams and flow diagrams may not necessarily need to be performed in the order presented, or may not necessarily need to be performed at all, according to some embodiments of the invention.

These computer-executable program instructions may be loaded onto a general purpose computer, a special purpose computer, a processor, or other programmable data processing apparatus to produce a particular machine, such that the instructions that execute on the computer, processor, or other programmable data processing apparatus create means for implementing one or more functions specified in the flow diagram block or blocks. These computer program instructions may also be stored in a computer-readable memory that can direct a computer or other programmable data processing apparatus to function in a particular manner, such that the instructions stored in the computer-readable memory produce an article of manufacture including instruction means that implement one or more functions specified in the flow diagram block or blocks. As an example, embodiments of the invention may provide for a computer program product, comprising a computer usable medium having a computer-readable program code or program instructions embodied therein, said computer-readable program code adapted to be executed to implement one or more functions specified in the flow diagram block or blocks. The computer program instructions may also be loaded onto a computer or other programmable data processing apparatus to cause a series of operational elements or steps to be performed on the computer or other programmable apparatus to produce a computer-implemented process such that the instructions that execute on the computer or other programmable apparatus provide elements or steps for implementing the functions specified in the flow diagram block or blocks.

Accordingly, blocks of the block diagrams and flow diagrams support combinations of means for performing the specified functions, combinations of elements or steps for performing the specified functions and program instruction means for performing the specified functions. It will also be understood that each block of the block diagrams and flow diagrams, and combinations of blocks in the block diagrams and flow diagrams, can be implemented by special purpose, hardware-based computer systems that perform the specified functions, elements or steps, or combinations of special purpose hardware and computer instructions.

While the invention has been described in connection with what is presently considered to be the most practical and various embodiments, it is to be understood that the invention is not to be limited to the disclosed embodiments, but on the contrary, is intended to cover various modifications and equivalent arrangements included within the scope of the appended claims.

This written description uses examples to disclose the invention, including the best mode, and also to enable any person skilled in the art to practice the invention, including making and using any devices or systems and performing any incorporated methods. The patentable scope of the invention is defined in the claims and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A method (200) comprising:
determining (210), by a forecasting system associated with a power utility (135) and comprising one or more computers (130), a baseline load forecast for a future time period;
determining (210), by the forecasting system, information associated with at least one of (i) a scheduled demand for the future time period or (ii) a planned outage associated with the future time period;
modifying (215), by the forecasting system based at least in part on the determined information, the baseline load forecast; and
generating (220), by the forecasting system based at least in part on the modified baseline load forecast, a bid contract for the future time period.

2. The method (200) of claim 1, further comprising:
determining, by the forecasting system, a renewable resource availability for the future time period,
wherein modifying (215) the baseline load forecast comprises modifying the baseline load forecast based at least in part on the determined renewable resource availability.

3. The method (200) of claim 2, wherein determining a renewable resource availability comprises:
identifying (345), by the forecasting system, at least one renewable resource (165) associated with the power utility (135);
obtaining (350), by the forecasting system, weather forecast data for the future time period; and
determining (355), by the forecasting system based at least in part on the weather forecast data, an expected output of the at least one renewable resource (168).

4. The method (200) of claim 2 or claim 3, wherein determining a renewable resource availability comprises:
identifying (345), by the forecasting system, one or more renewable resources associated with one or more customers of the power utility ((135); and
determining (355), by the forecasting system, a potential impact of the one or more renewable resources on one or more load conditions for the future time period.

5. The method (200) of claim 4, wherein determining (355) a potential impact of the one or more renewable resources on one or more load conditions comprises determining at least one of (i) an estimated output of the one or more renewable resources that will be supplied to a power distribution network during the future time period or (ii) an estimated output of the one or more renewable resources that will be consumed by the one or more customers during the future time period.

6. The method (200) of any one of claims 1 to 5, wherein determining (210) a baseline load forecast for a future time period comprises determining a baseline load forecast for a subsequent day.

7. The method (200) of any one of claims 1 to 6, wherein determining (210) a baseline load forecast comprises:
determining, by the forecasting system, a degree day associated with the future time period;
obtaining, by the forecasting system, historical load data;
identifying, by the forecasting system based at least in part upon the historical load data, a load associated with a historical degree day similar to the determined degree day; and
multiplying, by the forecasting system, the identified historical load by a load growth factor to determine the baseline load forecast.

8. The method (200) of any one of claims 1 to 7, wherein determining (210) information associated with a scheduled demand comprises:
obtaining (315), by the forecasting system for the future time period, scheduled electrical load data for one or more customers of the power utility (135); and
calculating, by the forecasting system based at least in part upon the obtained data, the scheduled demand.

9. The method (200) of claim 8, further comprising:
directing, by the forecasting system, the communication of a respective request for scheduled electrical load data to a respective device associated with each of the one or more customers,
wherein obtaining (315) scheduled electrical load data comprises receiving the scheduled electrical load data in response to the one or more communicated requests.

10. The method of any one of claims 1 to 9, wherein determining information associated with a planned outage comprises:
identifying (325), by the forecasting system, a planned outage for the future time period;
determining (330), by the forecasting system, a switching schedule associated with the identified planned outage; and
determining, by the forecasting system, an impact of the planned outage and the switching schedule on one or more load conditions for the future time period.

11. A system (100) comprising:
at least one memory (142) configured to store computer-executable instructions; and
at least one processor (141) configured to access the at least one memory and to execute computer-executable instructions for performing the method of any one of claims 1 to 10.
